# EUROPEAN PATENT APPLICATION

(11) **EP 4 047 969 A1**
(43) Date of publication of application: **24.08.2022**
(21) Application number: 22157384.3
(22) Date of filing: 18.02.2022
(51) Int. Cl.: H04W 12/02, H04W 12/06, H04W 12/037, H04L 9/08

(54) **ENHANCEMENTS FOR AUTHENTICATION IN CELLULAR COMMUNICATION NETWORKS**

(30) Priority: 22.02.2021 FI 20215188
(71) Applicant: Nokia Technologies Oy, 02610 Espoo (FI)
(72) Inventor: SCHNEIDER, Peter, 83607 Holzkirchen (DE); JERICHOW, Anja, 85567 Grafing bei München (DE); MAVUREDDI DHANASEKARAN, Ranganathan, 81737 Munich (DE)
(74) Representative: Nokia EPO representatives

(57) **Abstract**

According to an example aspect of the present invention, there is provided a method, apparatus, and computer program for maintaining a subscription module, wherein the subscription module comprises a subscription identifier and a subscription long-term key; generating a long-term derivative from at least the subscription long-term key and a replay attack protector; and generating a concealed identifier based on at least the subscription identifier and the subscription long-term derivative.

## Description

### FIELD

Various example embodiments relate in general to cellular communication networks and more specifically, to enhancements for authentication in such networks.

### BACKGROUND

Authentication is needed in various communication networks to verify that a certain party, such as a user, subscription, or network entity, really is the party that it claims to be. That is to say, if a party provides an identifier for authentication, it should be ensured that the party is legitimate, and the provided identifier is the identifier of the party in question. So, for example an attacker should not be allowed to use an identifier of the legitimate party.

Proper authentication needs to be ensured for example in cellular communication systems, such as in 5G systems developed by the 3rd Generation Partnership Project, 3GPP. The 3GPP still develops 5G systems and there is a need to provide improved methods, apparatuses, and computer programs for improving authentication in 5G systems. Such improvements may be useful in other cellular communication networks as well.

### SUMMARY

According to some aspects, there is provided the subject-matter of the independent claims. Some embodiments are defined in the dependent claims.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect of the present invention, there is provided a first apparatus comprising:
means for maintaining a subscription module, wherein the subscription module comprises a subscription identifier and a subscription long-term key;
means for generating a long-term derivative from at least the subscription long-term key and a replay attack protector; and
means for generating a concealed identifier based on at least the subscription identifier and the subscription long-term derivative.

The replay attack protector may be shared by the first apparatus and a home network, e.g., a second apparatus controlling at least some operation of the home network. The home network may refer to a mobile communication network to which the subscription module is configured to enable registering for mobile communications. The replay attack protector may be contained in the concealed identifier SUCI, optionally in cleartext.

The first apparatus may further comprise a transmitter for transmitting the concealed identifier to the second apparatus.

The first apparatus of the first aspect may be a user equipment or a control device configured to control the functioning thereof, possibly when installed therein.

The subscription identifier may be used partially. The subscription identifier may be used with encryption in generating the subscription identifier.

The long-term derivative may be generated from at least: the subscription long-term key; the replay attack protector; and further information. The further information may comprise an encryption scheme identifier.

The long-term derivative may be cryptographically derived from source data. The long-term derivative may be generated from source data using a one-way function.

The subscription module may be a physical module. The subscription module may be a USIM. The subscription module may comprise an UICC. Alternatively, the subscription module may be a programmatic module. The subscription module may be an eUICC. The maintaining in this context is refers to maintaining a given capability or information.

Said means for generating the concealed identifier may further comprise means for generating an integrity Message Authentication Code, MAC, tag using the subscription long-term derivative as an input.

Said first apparatus may further comprise means for including the integrity MAC tag into the concealed identifier.

Said means for generating the concealed identifier may further comprise means for generating an intermediate key.

Said means for generating the concealed identifier may further comprise means for generating a MAC key based on the intermediate key and the subscription long-term derivative.

Said means for generating the concealed identifier may further comprise means for generating the integrity MAC tag based on the MAC key.

Said first apparatus may further comprise means for generating the intermediate key based on a public key associated with the subscription module.

Said first apparatus may further comprise means for storing the public key in the subscription module.

Said means for generating the concealed identifier may further comprise means for generating an intermediate key based on a public key stored in the subscription module.

Said means for generating a first MAC key may be configured to use the intermediate key.

Said means for generating the concealed identifier may further comprise means for generating a second MAC key based on the first MAC key and the subscription long-term derivative.

Said means for generating the concealed identifier may further comprise:
means for obtaining from the first apparatus an ephemeral public key of the first apparatus;
means for generating an ephemeral shared symmetric key using at least: the private key of the mobile communication network; and the ephemeral public key of the first apparatus; and
means for verifying whether the concealed identifier has been generated using ephemeral shared symmetric key.

According to a second aspect of the present invention, there is provided a second apparatus comprising:
means for receiving a concealed identifier from a first apparatus;
means for deconcealing a subscription identifier from the concealed identifier;
means for obtaining a replay attack protector from the concealed identifier;
means for obtaining a subscription long-term key corresponding to the subscription identifier;
means for generating, using at least the subscription long-term key and the replay attack protector, a subscription long-term derivative; and
means for verifying whether the concealed identifier has been generated using the subscription long-term derivative.

The means for deconcealing the subscription identifier from the concealed identifier may be configured to decrypt at least portion of the concealed identifier using a private key of a home network. Said at least portion of the concealed identifier may be encrypted using a public key of the home network, the public key of the home network corresponding to the private key of the home network.

The second apparatus of the second aspect may be, or comprise, a deconcealing function or a control device configured to control the functioning thereof, possibly when installed therein.

Said means for verifying the concealed identifier further comprise means for generating an integrity Message Authentication Code, MAC, tag using the subscription long-term key as an input, and means for comparing the generated integrity MAC tag with an integrity MAC tag which is a part of the concealed identifier.

Said means for verifying the concealed identifier may further comprise means for generating an intermediate key, means for generating a MAC key using the intermediate key and the subscription long-term key and means for generating the integrity MAC tag using the MAC key. The intermediate key may be generated using a public key associated with the subscription module;

Said means for deconcealing the concealed identifier may further comprise means for generating an intermediate key using a private key belonging to a public key associated with the subscription module, means for generating a first MAC key using the intermediate key, means for generating a second MAC key using the first MAC key and the subscription long-term key and means for generating an integrity MAC tag using the second MAC key.

According to a third aspect, there is provided a first method comprising:
maintaining a subscription module, wherein the subscription module comprises a subscription identifier and a subscription long-term key;
generating a long-term derivative from at least the subscription long-term key and a replay attack protector; and
generating a concealed identifier based on at least the subscription identifier and the subscription long-term derivative.

The first method may be performed by a user equipment or a control device configured to control the functioning thereof, possibly when installed therein.

According to a fourth aspect, there is provided a second method in a second apparatus, the method comprising:
receiving a concealed identifier from a first apparatus;
deconcealing a subscription identifier from the concealed identifier;
obtaining a replay attack protector from the concealed identifier;
obtaining a subscription long-term key corresponding to the subscription identifier;
generating, using at least the subscription long-term key and the replay attack protector, a subscription long-term derivative; and
verifying whether the concealed identifier has been generated using the subscription long-term derivative.

According to a fifth aspect, there is provided a first apparatus comprising at least one processing core, at least one memory including computer program code, the at least one memory and the computer program code being configured to, with the at least one processing core, cause the first apparatus at least to perform:
maintaining a subscription module, wherein the subscription module comprises a subscription identifier and a subscription long-term key;
generating a long-term derivative from at least the subscription long-term key and a replay attack protector; and
generating a concealed identifier based on at least the subscription identifier and the subscription long-term derivative.

The first apparatus of the fifth aspect may be a user equipment or a control device configured to control the functioning thereof, possibly when installed therein.

According to a sixth aspect, there is provided a second apparatus comprising at least one processing core, at least one memory including computer program code, the at least one memory and the computer program code being configured to, with the at least one processing core, cause the second apparatus at least to:
receive a concealed identifier from a first apparatus;
deconceal a subscription identifier from the concealed identifier;
obtain a replay attack protector from the concealed identifier;
obtain a subscription long-term key corresponding to the subscription identifier;
generate, using at least the subscription long-term key and the replay attack protector, a subscription long-term derivative; and
verify whether the concealed identifier has been generated using the subscription long-term derivative.

The second apparatus of the sixth aspect may be a deconcealing function or a control device configured to control the functioning thereof, possibly when installed therein.

According to a seventh aspect of the present invention, there is provided a non-transitory computer readable medium having stored thereon a set of computer readable instructions that, when executed by at least one processor, cause a first apparatus to at least perform the first method. According to an eighth aspect of the present invention, there is provided a non-transitory computer readable medium having stored thereon a set of computer readable instructions that, when executed by at least one processor, cause a second apparatus to at least perform the second method.

According to a ninth aspect of the present invention, there is provided a computer program comprising instructions which, when the program is executed by a first apparatus, cause the first apparatus to carry out the first method. According to a tenth aspect of the present invention, there is provided a computer program comprising instructions which, when the program is executed by a second apparatus, cause the second apparatus to carry out the second method.

According to an eleventh example aspect, there is provided an apparatus comprising:
at least one memory for maintaining at least: a public key of a mobile communication network; a subscription identifier of a subscriber of the mobile communication network; and a subscription long-term key of the mobile communication network subscriber;
at least one processor configured to generate:
subscription long-term derivative from at least the subscription long-term key and a replay attack protector shared by a mobile communication network and a subscriber thereof; and
a message authenticator tag for cryptographically verifying a subscription concealed identifier of the subscriber from at least the subscription long-term derivative.

The at least one processor may be further configured to generate the replay attack protector.

The at least one processor may be further configured to generate an ephemeral message authentication key. The at least one processor may be further configured to generate an ephemeral shared symmetric encryption key. The ephemeral message authentication key may correspond to the ephemeral shared symmetric encryption key. The at least one processor configured may be further configured to generate the message authenticator tag from at least the subscription long-term derivative and the ephemeral message authentication key.

The at least one processor may be further configured to encrypt a portion of the subscription identifier by the ephemeral shared symmetric encryption key.

The at least one processor may be further configured to contain the encrypted portion of the subscription identifier in the subscription concealed identifier.

The at least one processor may be further configured to generate the message authenticator tag from at least the subscription long-term derivative and the encrypted portion of the subscription identifier.

The subscription long-term derivative may be generated from at least: the subscription long-term key; the replay attack protector; and a key derivation function identifier.

The apparatus may be or comprise user equipment. The apparatus may be or comprise a subscriber identity module. The apparatus may be or comprise a user equipment controller. The apparatus may be or comprise a network function. The network function may be a 3GPP 5G compliant network function.

According to a twelfth example aspect, there is provided a first apparatus comprising:
at least one memory for maintaining at least: a public key of a mobile communication network; a subscription identifier of a subscriber of the mobile communication network; a subscription long-term key of the mobile communication network subscriber; and a replay attack protector received or generated by the first apparatus;
at least one processor configured to generate any one or more of:
an ephemeral public key of the first apparatus and a corresponding ephemeral private key;
an ephemeral shared symmetric key using at least: the public key of the mobile communication network; and the ephemeral private key;
an ephemeral encryption key and an ephemeral message authentication key from at least the ephemeral shared symmetric key;
at least partially encrypted subscription identifier based on the ephemeral shared symmetric key and at least a portion of the subscription identifier;
a long-term derivative from at least the long-term key and the replay attack protector;
a first message authentication tag based on at least: the ephemeral message authentication key; and either the subscription long-term key or the long-term derivative;
a second message authentication tag based on the first message authentication tag and the at least partially encrypted subscription identifier; and
a subscription concealed identifier based on the ephemeral public key; the at least partially encrypted subscription identifier; and the second message authentication tag.

The first apparatus may further comprise a transmitter for transmitting the concealed identifier to a second apparatus.

The first apparatus may comprise a subscription module interface configured to interface with a subscription module that comprises a subscription identifier and a subscription long-term key.

According to a thirteenth example aspect, there is provided the method implemented in any preceding example aspect.

### BRIEF DESCRIPTION OF THE DRAWINGS

FIGURE 1 illustrates a communication system in accordance with at least some embodiments;
FIGURE 2 illustrates a block diagram in accordance with at least some embodiments;
FIGURE 3 illustrates a signalling graph in accordance with at least some embodiments;
FIGURE 4 illustrates an example apparatus capable of supporting at least some embodiments;
FIGURE 5 illustrates a flow graph of a first method in accordance with at least some embodiments;
FIGURE 6 illustrates a flow graph of a second method in accordance with at least some embodiments;
FIGURE 7 illustrates a flow graph of a third method in accordance with at least some embodiments; and
FIGURE 8 illustrates a flow graph of a fourth method in accordance with at least some embodiments.

### EMBODIMENTS

Embodiments of the present invention provide enhancements for authentication in cellular communication systems by providing protection against unauthorized generation of concealed subscription identifiers. More specifically, embodiments of the present invention make it possible to avoid linkability attacks by linking concealed identifiers generated from the same globally unique permanent identifier of a subscription module together. The concealed identifiers generated from the same globally unique permanent identifier of the subscription module may be generated using a second function requiring at least the long-term key as input indirectly via a long-term derivative that is formed based on the long-term key and a replay attack protector. In some embodiments, the second function is a one-way function. In an example embodiment, the second function is an encryption function.

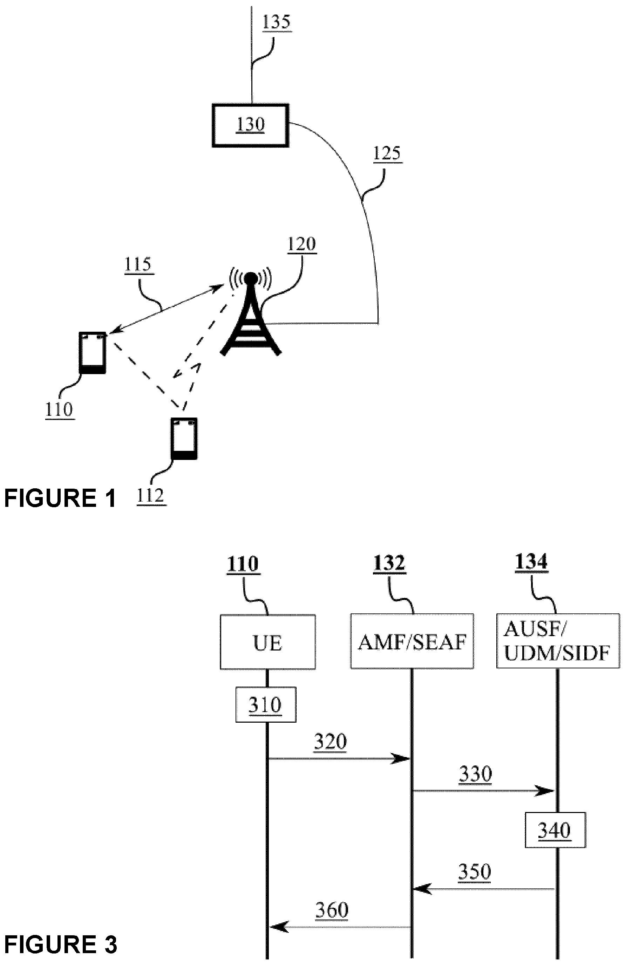

FIGURE 1 illustrates a communication system in accordance with at least some embodiments. According to the example scenario of FIGURE 1, there is a cellular communication system, which comprises first and second User Equipment UEs 110, 112, one or more Base Stations, BS, 120, and core network element 130. The first UE 110 connected to the BS 120 via an air interface 115.

The first and second UE 110, 112 may comprise or be, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, another kind of suitable wireless terminal. Air interface between the first UE 110 and the BS 120 may be configured in accordance with a Radio Access Technology, RAT, which both the first UE 110 and the BS 120 are configured to support. Examples of the cellular RATs include Long Term Evolution, LTE, which may be known as fourth generation, 4G, radio access technology and New Radio, NR, which may be known as fifth generation, 5G, radio access technology. Thus, the first UE 110 may be configured to operate, or comprise means for operating, in a radio access network of the cellular communication system.

The BS 120 may be connected, directly or via at least one intermediate node, with the core network 130 via the interface 125. The core network 130 may be, in turn, coupled via the interface 135 with another network (not shown in FIGURE 1), via which connectivity to further networks may be obtained, for example via a worldwide interconnection network. In case of 4G, the core network 130 may be referred to as an Evolved Packet Core, EPC, and in case of 5G, the core network 130 may be referred to as a 5G Core, 5GC. In any case, embodiments of the present invention are not restricted to any particular cellular communication technology.

The core network 130 may comprise more than one Public Land Mobile Network, PLMN, each equipped with at least one NF. The NF may refer to an operational and/or a physical entity. The NF may be a specific network node or element, or a specific function or a set of functions carried out by one or more entities, such as a virtual NF. At least some example embodiments of the present invention may be applied in containerized or compartmentalized deployments as well. One physical node may be configured to perform tasks of multiple NFs.

In case of authentication, one issue is to avoid so called linkability attacks, wherein an attacker may abuse the authentication procedure to find out whether a legitimate subscriber observed at a first time at a first location is also present at a second time at a second location. In FIGURE 1, the first UE 110 or a subscription module hosted by the first UE 110 may be the legitimate subscriber while the second UE 112 may be the attacker. For a linkability attack, the attacker needs to at least listen what the legitimate subscriber sends and also modify a part of what is received from the legitimate subscriber. In some embodiments, the subscription module may be a Subscriber Identity Module, SIM, such as a Universal Subscriber Identity Module, USIM.

A linkability attack may be based on replaying a concealed identifier of the subscription module hosted by the first UE 110. In some embodiments the concealed identifier may be a Subscription Concealed Identifier, SUCI. The concealed identifier of the subscription module may comprise a part of a globally unique permanent identifier of the subscription module, such as a Subscription Permanent Identifier, SUPI. More specifically, in some embodiments, the SUCI may comprise a Mobile Subscriber Identification Number, MSIN, that is a part of the SUPI. The SUCI may also comprise a home network identifier identifying a home network of the subscription module. The MSIN part of the SUPI may be concealed by a protection scheme while a home network identifier may be contained in the SUCI in plain text. The MSIN may be a part of an International Mobile Subscriber Identifier, IMSI. The concealed identifier may further comprise a replay attack protector, here denoted as RAND_{SUCI}. The replay attack protector RAND_{SUCI} may be generated at UE end (e.g., by the UE 110, by the subscriber module). The replay attack protector RAND_{SUCI} may generated using randomising. Alternatively, the replay attack protector RAND_{SUCI} may be derived from an earlier used replay attack protector. The replay attack protector RAND_{SUCI} may be additionally used in another message exchanged between the UE and the network.

As an example, if an operator rolls out a 5G stand-alone network, 4G and 5G networks may exist simultaneously. In such a case, the subscription module may have a permanent identifier which can be used in both, 4G and 5G, systems. The permanent identifier may be the IMSI of the subscription module. In areas without 5G coverage, the subscription module may need to use 4G and thus, use procedures of an Evolved Packet System, EPS. However, at least in case of 4G, catching of the IMSI may be possible. The attacker, such as the second UE 112, may therefore catch the permanent identifier, i.e., the IMSI, of the subscription module when 4G is used.

The challenge in this example is that once the attacker has obtained the IMSI of the subscription module, the attacker can use the IMSI to generate arbitrary amount of valid SUCIs for the subscriber if the attacker also knows a public key of the home network of the subscription module. It should be noted that the public key of the home network is not a secret key, even though an operator may try to hide the public key. The public key may be deployed on all subscription modules of the operator.

A plaintext block used for symmetric encryption may comprise the MSIN part of the IMSI. If the attacker knows the MSIN part of the IMSI, the attacker can generate an ephemeral key pair and produce a valid SUCI for the subscription module. The attacker can therefore perform a SUCI-based linkability attack without having a need to replay a previously captured SUCI. So even if replaying of the SUCI would be prevented by using a time stamp, the attacker would be able to perform the linkability attack by generating a valid SUCI based on the known IMSI and a current time.

For instance, the attacker may obtain the permanent identifier of a victim UEx, e.g., by IMSI catching in 4G (the 4G IMSI is used also as permanent identifier in 5G). At some other time and/or place, the attacker may observe a UEy in a 5G network and want to find out whether UEy=UEx. For this, at the moment UEy sends a SUCIy, the attacker may replace SUCIy with a different SUCIx. SUCIx is a valid SUCI for UEx. The attacker can generate SUCIx solely based on the permanent identifier of UEx, plus the public key of the home network, that is not secret, using the currently specified scheme, which is also public. The attacker then observes whether the authentication of UEy is successful and UEy receives service. If so, the attacker knows that UEy = UEx.

There is therefore a need to provide enhancements for authentication, especially when considering the risk of linkability attacks.

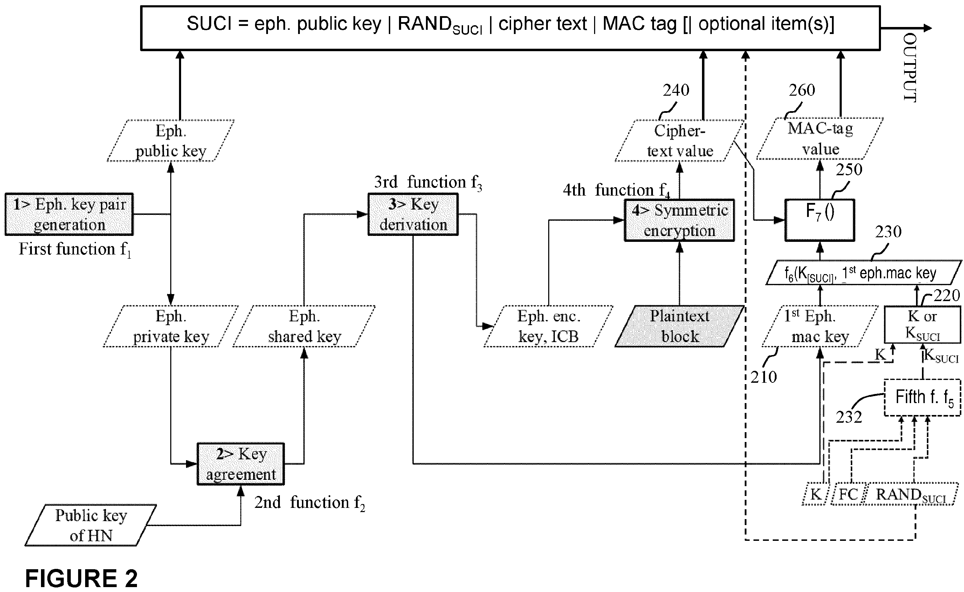

FIGURE 2 illustrates an example of a block diagram in accordance with at least some embodiments. Various functions used in FIGURE 2 are next briefly listed. An ephemeral public key and an ephemeral private key are generated using a first function f₁. An ephemeral shared key is formed using a second function f₂. An ephemeral encryption key (ICB) and a first ephemeral MAC key 210 are formed using a third function f₃. Symmetric encryption is performed using a fourth function f₄. The subscription long-term derivative of an example embodiment is formed using a fifth function. A second ephemeral MAC key 230 is formed using a sixth function. A MAC tag 260 is formed using a seventh function.

In the example of FIGURE 2, a first ephemeral MAC key is denoted by 210, a long-term key K of the subscription module or a long-term derivative K_{SUCI}, jointly denoted as K_{[SUCI]} 220. Reference sign 220 is here used to denote K_{[SUCI]} regardless of that whether K or K_{SUCI} is being used. The sixth function f₆ shown in 230 is used to determine a new, second ephemeral MAC key 230. In this document, brackets [] are used to express an optional item that may or may not be present. The second ephemeral MAC key 230 and a cipher-text 240 may be used as an input to the seventh function, such as a MAC function 250 to create the MAC tag 260. The second ephemeral MAC key 230 may be thus used for the creation of the MAC tag 260 for subsequent verification of the SUCI. In general, the MAC tag 260 may be referred to as an integrity tag of a concealed identifier of the subscription module hosted by first UE 110.

On determining the first ephemeral MAC key 210 and determining the long-term key K 220, the sixth function f₆ shown in 230 may be applied using the long-term key K 220 either as such or via the long-term cryptographic derivative K_{SUCI} and the first ephemeral MAC key 210 as inputs, to generate the second ephemeral MAC key 230. In an example embodiment, the second ephemeral MAC key 230 and the cipher-text value 240 result are used as inputs for the seventh function f₇ 250 creating the MAC tag 260: the MAC tag ← MAC function (f (K_{[SUCI]}, Ephemeral MAC key)). The MAC tag 260 cannot be generated by an attacker, such as the second UE 112 in FIGURE 1, unless the attacker would be in possession of the individual long-term key K 220 stored in the subscription module. That is to say, the subscription module may hold a subscription identifier and the subscription long-term key K 220. With the MAC tag 260, the ephemeral public key, the replay attack protector RAND_{SUCI}, and the ciphertext block, the SUCI is generated. The replay attack protector RAND_{SUCI} can be as salt so as to mitigate replay attacks.

The subscription module or mobile equipment comprising the subscription module comprises in an example embodiment a replay attack protector RAND_{SUCI} that is also exchanged between the first UE 110 and the network. In case that the long-term cryptographic derivative K_{SUCI} is used as a direct input for the generation of the second ephemeral MAC key 230, the subscription module and/or the mobile equipment of the first UE 110 may compute the long-term cryptographic derivative K_{SUCI}. Fig. 2 presents an example of the long-term derivative K_{SUCI} use. In an example embodiment, the long-term cryptographic derivative K_{SUCI} is computed using the fifth function f₅ 232 such as a key derivation function of at least a replay attack protector (e.g., RAND_{SUCI}) and the long-term key K, optionally of further items as well, such as an FC. In an example embodiment, the replay attack protector RAND_{SUCI} is the challenge used in a cryptographic operation between the first UE 110 and the network. The key derivation function may comply with any of version key derivations according to Annex A in 3GPP TS 33.501 version 17.0.0, or the functions of the Milenage and Tuak algorithm sets (3GPP TS 35.205 16.0.0, 3GPP TS 35.231 version 16.0.0) The fifth function may alternatively be a one-way function. The one-way function may be SHA-1, SHA-2, or SHA-3. Any of the afore described alternatives for the fifth function may be used in implementation of any one or more of: the second function; the third function; the sixth function; and/or the seventh function.

The linkability attack can be thus overcome, especially if the sixth function f₆ shown in 230 is a one-way function which aims at preventing that the attacker could find out the long-term key K 220. The long-term key K 220 is known to the legitimate subscriber, such as the first UE 110 in FIGURE 1, but not to the attacker. So, the attacker will not be able to generate a valid concealed identifier, such as the SUCI. After deconcealing the concealed identifier, the network can map the subscription identifier with the long-term key K or the long-term derivative K_{SUCI} 220 and can verify the integrity of the received ciphertext, i.e., determine the integrity tag 260 and compare the determined integrity tag with the received MAC tag. In this way, the network can verify the concealed identifier and get an assurance that the concealed identifier was generated by the legitimate subscriber, not by an attacker that is in possession of the permanent identifier, i.e., the IMSI.

If the attacker sends a spoofed concealed identifier, the MAC tag provided by the attacker will be different from the expected MAC tag computed by the network, and the network will consider the concealed identifier as invalid. The attacker will observe a failure in all cases, so the attacker cannot perform the linkability attack successfully.

FIGURE 3 illustrates a signalling graph in accordance with at least some embodiments. On the vertical axes are disposed, from the left to the right, the first UE 110, an intermediary NF 132, and an authentication/subscriber management/deconcealing function 134. Time advances from the top towards the bottom. In an example embodiment, the intermediary NF 132 and the authentication/subscriber management/deconcealing function 134 are located in the core network 130 of FIGURE 1 for example. In some embodiments, even though the intermediary NF 132 is shown in the example of FIGURE 3, the intermediary NF 132 is absent, and the first UE 110 may communicate directly with the authentication/subscriber management/deconcealing function 134.

In an example embodiment, the intermediary NF 132 is an Access and Mobility management Function, AMF, or a Security Anchor Function, SEAF. In an example embodiment, the SEAF is co-located with the AMF. In an example embodiment, a deconcealing part of the authentication/subscriber management/deconcealing function 134 is responsible for decrypting. In an example embodiment, the subscriber management is responsible for verifying the deconcealed identifiers. In an example embodiment, the deconcealing function 134 is a part of an Authentication Server Function, AUSF, a Unified Data Management, UDM or a functional element of the UDM, such as a Subscription Identifier Deconcealing Function, SIDF. In an example embodiment, the authentication/subscriber management/deconcealing function 134 is configured to operate or comprise means for operating in a core network of the cellular communication system. In an example embodiment, the first UE 110 holds a subscription module, such as a USIM. In an example embodiment, the subscription module further holds a subscription identifier and a subscription long-term key K 220.

At step 310, the first UE 110 may generate a concealed identifier, such as a SUCI, using as input at least the subscription identifier and the subscription long-term key K or the long-term derivative K_{SUCI} 220. In an example embodiment, the first UE 110 generates the integrity MAC tag 260 using the subscription long-term key K or the long-term derivative K_{SUCI} 220 as an input, e.g., using the seventh function f₇ 250. In an example embodiment, the first UE 110 includes the integrity MAC tag 260 into the concealed identifier SUCI. In some embodiments, the first UE 110 may first generate an intermediate key, such as the Ephemeral shared key in FIGURE 2, e.g., using the second function f₂. In an example embodiment, the first UE 110 generates the intermediate key using a public key, such as a public key of a Home Network, HN, in FIGURE 2. In an example embodiment, the public key is stored in the subscription module. The first UE 110 may then generate a MAC key (such as the first ephemeral MAC key 210), e.g., using the third function f₃. The first UE 110 may then generate a second ephemeral MAC key (230 in FIGURE 2) using the intermediate key and the subscription long-term key K, e.g., using the sixth function f₆. The first UE 110 may finally generate an integrity MAC tag, such as the MAC tag 260 in FIGURE 2, e.g., using the seventh function F₇.

In some embodiments, the first UE 110 may first generate an intermediate key, such as a shared secret (such as Eph. shared key in FIGURE 2), e.g., using the second function f₂. The intermediate key is generated, for example, using a public key (such as public key of a Home Network, HN, in FIGURE 2). In an example embodiment, the intermediate key is stored in the subscription module. In an example embodiment, the first UE 110 generates a first MAC key (such as the ephemeral MAC key 210 in FIGURE 2) using the intermediate key. In an example embodiment, the first UE 110 generates a second MAC key (such as new ephemeral MAC key 230 in FIGURE 2) using the first MAC key 210 and the subscription long-term key K or the subscription long-term derivative K_{SUCI}, 220. FIGURE 2 shows the sixth function generating the second ephemeral MAC key 230. In an example embodiment, the first UE 110 generates an integrity MAC tag (such as the MAC tag 260 in FIGURE 2) using the second MAC key 230.

In an example embodiment, the first UE 110 first determines the first ephemeral MAC key 210 and the long-term key K 220. In an example embodiment, the first UE 110 then determines the second ephemeral MAC key 230 based on the first ephemeral MAC key 210 and the long-term key 220. In an example embodiment, the first UE 110 determines the second ephemeral MAC key 230 using the sixth function f₆ shown in 230 requiring at least the long-term key 220 and the first ephemeral MAC key 210 as inputs. In an example embodiment, the first UE 110 further determines the integrity MAC tag value 260 using the MAC function 250. In an example embodiment, the MAC function 250 requires the second ephemeral key 230 and the cipher-text 240 as inputs. In an example embodiment, the first UE 110 further determines the concealed identifier based on the integrity MAC tag value 260 using the second ephemeral MAC key 230 and the cipher-text value 240 as input to the MAC function 250.

In an example embodiment, the concealed identifier is either determined by the first UE 110 or by the subscription module. If the concealed identifier is to be determined by the subscription module, in an example embodiment, the first UE 110 receives the concealed identifier from the subscription module and determine the concealed identifier based on that, i.e., the subscription module may determine the concealed identifier and the integrity MAC tag 260 of the concealed identifier. The concealed identifier can be deconcealed by the deconcealing part of the authentication/subscriber management/deconcealment function 134.

In an example embodiment, the determination of the concealed identifier and the integrity MAC tag 260 of the concealed identifier is performed at the subscription module hosted by the first UE 110 for avoiding transferring the permanent identifier from the subscription module to a Mobile Equipment, ME, of the first UE 110. The user equipment without the subscription module may be referred to as the ME. In an example embodiment, access is required to the long-term key K 220, which is available in the subscription module but not at the ME of the first UE 110 originally. In an example embodiment, the calculation is done on the ME of the first UE 110 so that the subscription module implements the sixth function f₆ shown in 230 and provides an interface where the ME can pass the ephemeral first MAC key 210 to the subscription module and the subscription module returns the second ephemeral MAC key 230 by using the sixth function f₆ (K, MAC key) shown in 230. In an example embodiment, the first UE 110 uses the long-term derivative that does not expose the long-term key K and so the subscription module may more securely enable the ME to compute the integrity MAC tag 260. With the MAC tag 260, the ephemeral public key, RAND_{SUCI} (shared to the network, e.g., UDM, for K_{SUCI} calculation), and the ciphertext block, the SUCI is generated.

At step 320, the first UE 110 may transmit the concealed identifier to the intermediary NF 132 to be forwarded to the authentication/subscriber management/deconcealing function 134. In an example embodiment in which the concealed identifier SUCI is formed using the subscription long-term derivative K_{SUCI} and the replay attack protector RAND_{SUCI} is not otherwise known to the network, the first UE 110 additionally transmits the replay attack protector RAND_{SUCI} to the network. In an example embodiment, the replay attack protector RAND_{SUCI} is contained as a part of the concealed identifier SUCI or a message carrying the concealed identifier SUCI. In an example embodiment, the replay attack protector is implemented using a sequential counter such as SEQ known by both the UE 110 and the network, or using a derivative of such a sequential counter.

In an example embodiment, the intermediary NF 132 is in between first UE 110 and the authentication/subscriber management/deconcealing function 134 in the cellular communication system. In an example embodiment, the concealed identifier is transmitted in a registration request at step 320. In an example embodiment in which the replay attack protector RAND_{SUCI} is reused, the replay attack protector RAND_{SUCI} may be exchanged between the first UE 110 and the network on registering the UE 110 to the network.

At step 330, intermediary NF 132 may forward the concealed identifier to the deconcealing part of the authentication/subscriber management/deconcealing function 134. In an example embodiment, the concealed identifier is forwarded by the intermediary NF 132 in an authentication request. In an example embodiment, the authentication request is a Nausf UE Authentication Request.

At step 340, the authentication/subscriber management/deconcealing function 134 may deconceal the concealed identifier, resulting in a subscription identifier. In an example embodiment, the authentication/subscriber management/deconcealing function 134 retrieves subscription information belonging to the subscription identifier. In an example embodiment, the subscription information comprises the subscription long-term key K 220. In an example embodiment, the authentication/subscriber management/deconcealing function 134 also verifies the concealed identifier by comparing the concealed identifier or parts of the concealed identifier with the information generated from the concealed identifier and the subscription long-term key K 220. Also, the long-term derivative is generated from the concealed identifier and the subscription long-term key K 220 because the long-term key K 220 is one of input data for the long-term derivative. In an example embodiment using the long-term derivative, the long-term derivative is computed at the network as described in the foregoing. In an example embodiment, the authentication/subscriber management/deconcealing function 134 also verifies the concealed identifier by generating the integrity MAC tag 260 similarly as the UE. In an example embodiment, the authentication/subscriber management/deconcealing function 134 compares the generated integrity MAC to the integrity MAC tag provided by the first UE 110.

In some embodiments, the authentication/subscriber management/deconcealing function 134 verifies the concealed identifier by checking, after the deconcealment, the integrity MAC tag value 260 determined from second ephemeral MAC key 230, and the cipher-text value 240 using the MAC function 250. In an example embodiment, the second ephemeral MAC key 230 is determined using the sixth function f₆ shown in 230 with the long-term key K 220 of the subscription data along with the first ephemeral MAC key 210 as input parameters. In an example embodiment, the deconcealing function of the authentication/subscriber management/deconcealing function 134 verifies the integrity of the concealed identifier provided by the first UE 110 by calculating itself the integrity MAC tag value 260 over the ciphertext 240 received using the long-term K 220 and the ephemeral MAC key 230. In an example embodiment, the long-term key K 220 is stored to a memory of an authentication/subscriber management/deconcealing function 134. In an example embodiment, the long-term key K 220 is stored to a remote memory which can be accessed by the authentication/subscriber management/deconcealing function 134.

In an example embodiment, the deconcealing part of the authentication/subscriber management/deconcealing function 134 deconceals the concealed identifier. In an example embodiment, the deconcealing part of the authentication/subscriber management/deconcealing function 134 compares the integrity MAC tag value provided by the first UE 110 with the MAC tag value 260 determined after determining the second ephemeral MAC key 230. In an example embodiment, if the MAC tag value 260 provided by first UE 110 is the same as the determined MAC tag value 260, the deconcealing part of the authentication/subscriber management/deconcealing function 134 decides that the concealed identifier provided by first UE 110 is valid, i.e., the first UE 110 or the subscription module is the legitimate subscriber.

At step 350, the authentication part of the authentication/subscriber management/deconcealing function 134 may transmit an authentication response. In an example embodiment, the authentication response is a Nausf UE Authentication Response (5G SE AV). In case of successful verification of the concealed identifier provided by the first UE 110, the authentication response may comprise information allowing to authenticate the first UE 110. At step 360, the intermediary NF 132 may use this information to continue the authentication procedure by sending a next message to the first UE 110. In an example embodiment, the next message is an authentication challenge message.

Different embodiments of the present invention therefore provide various advantages. For instance, linkability attacks may be avoided. Moreover, only deconcealing function 134, such as a SIDF, and the first UE 110 may be affected. On the side of the first UE 110, if the calculation of the concealed identifier is done at the subscription module, only the subscription module is affected, not the first UE 110. Thus, security of the long-term key 220 can be fostered.

In an example embodiment, other encryption schemes co-exist, such as Profile <A> and Profile <B>, see the 3GPP standard specification TS 33.501 version 17.0.0, Annex C.1 For each existing scheme, a new scheme with a new scheme identifier may be added, wherein the new scheme identifier identifies the new scheme to be used with the otherwise unchanged profile. The deconcealing part of the authentication/subscriber management/deconcealing function 134 may need to support the new schemes but if the first UE 110, or the subscription module hosted by the first UE 110, does not support the new scheme, the existing schemes may still be used. In an example embodiment, the scheme identifier is used in the generating of the long-term derivative K_{SUCI} as denoted by FC.

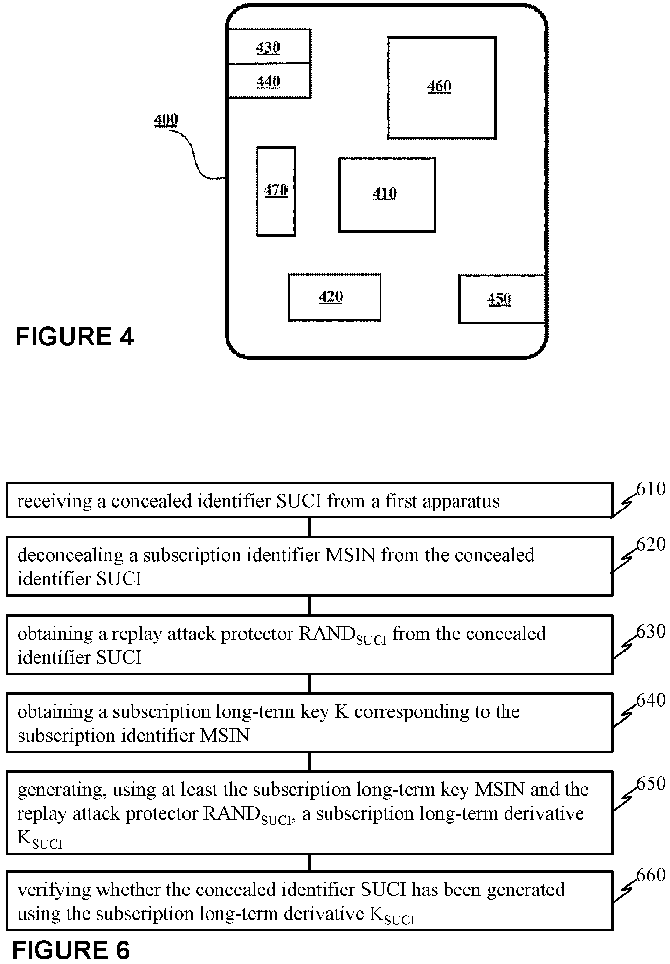

FIGURE 4 illustrates an example apparatus capable of supporting at least some example embodiments. Illustrated is apparatus 400, which may comprise, for example, the first UE 110 or the deconcealing part of the authentication/subscriber management/deconcealing function 134, or a control device configured to control the functioning thereof, possibly when installed therein. If the apparatus 400 is the first UE 110, hosting the subscription module may mean that the apparatus 400 comprises the subscription module. In an example embodiment, the apparatus 400 is arranged such that the subscription module is inserted to the apparatus 400 or fixed to the apparatus 400, i.e., not removable. However, if the apparatus 400 is a control device configured to control the functioning of the first UE 110, the hosting the subscription module may mean controlling the subscription module, possibly when the subscription module is within or programmatically loaded on the first UE 110.

In an example embodiment, the subscription module is maintained by a physical SIM card, such as a Universal Integrated Circuit Card, UICC, inserted to the first UE 110. That is, there is a circuitry comprising a memory and processing equipment in the SIM card and a subscription module as a functionality is provided by the memory with its stored information and the processing equipment. In an example embodiment, the subscription module is an embedded subscription module. In an example embodiment, the embedded subscription module is an embedded SIM, eSIM, according to GSMA Technical Specification SGP.22 v. 2.2.1. In an example embodiment, the embedded subscription module is embedded directly to the first UE 110. In an example embodiment, the subscription module is implemented as a software SIM. In such a case transmitting and receiving between the subscription module and the first UE 110 may take place between codes/functions that implement the subscription module and the first UE 110.

The apparatus 400 comprises a processor 410 In an example embodiment, the processor 410 comprises or is a single- or multi-core processor. In an example embodiment, the single-core processor comprises one processing core and a multi-core processor comprises more than one processing core. The processor 410 may comprise, in general, a control device. The processor 410 may comprise more than one processor. The processor 410 may be a control device. A processing core may comprise, for example, a Cortex-A8 processing core manufactured by ARM Holdings or a Steamroller processing core produced by Advanced Micro Devices Corporation. The processor 410 may comprise at least one Qualcomm Snapdragon and/or Intel Atom processor. The processor 410 may comprise at least one application-specific integrated circuit, ASIC. The processor 410 may comprise at least one fieldprogrammable gate array, FPGA. The processor 410 may be means for performing method steps in apparatus 400. The processor 410 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The apparatus 400 may comprise a memory 420. The memory 420 may comprise a random-access memory and/or a permanent memory. The memory 420 may comprise at least one RAM chip. The memory 420 may comprise a solid-state, magnetic, optical and/or holographic memory, for example. The memory 420 may be at least in part accessible to the processor 410. The memory 420 may be at least in part comprised in the processor 410. The memory 420 may be means for storing information. The memory 420 may comprise computer instructions that the processor 410 is configured to execute. When the computer instructions configured to cause the processor 410 to perform certain actions are stored in the memory 420, and the apparatus 400 overall is configured to run under the direction of the processor 410 using the computer instructions from the memory 420, the processor 410 and/or its at least one processing core may be considered to be configured to perform said certain actions. The memory 420 may be at least in part comprised in the processor 410. The memory 420 may be at least in part external to the apparatus 400 but accessible to the apparatus 400.

The apparatus 400 may comprise a transmitter 430. The apparatus 400 may comprise a receiver 440. The transmitter 430 and the receiver 440 may be configured to transmit and receive, respectively, information in accordance with at least one cellular or non-cellular standard. The transmitter 430 may comprise more than one transmitter. The receiver 440 may comprise more than one receiver. The transmitter 430 and/or the receiver 440 may be configured to operate in accordance with Global System for Mobile communication, GSM, Wideband Code Division Multiple Access, WCDMA, Long Term Evolution, LTE, and/or 5G/NR standards, for example.

The apparatus 400 may comprise a Near-Field Communication, NFC, transceiver 450. The NFC transceiver 450 may support at least one NFC technology, such as Bluetooth, Bluetooth Low Energy, or similar technologies.

The apparatus 400 may comprise a User Interface, UI, 460. The UI 460 may comprise at least one of a display, a keyboard, a touchscreen, a vibrator arranged to signal to a user by causing the apparatus 400 to vibrate, a speaker or a microphone. A user may be able to operate the apparatus 400 via the UI 460, for example to accept incoming telephone calls, to originate telephone calls or video calls, to browse the Internet, to manage digital files stored in the memory 420 or on a cloud accessible via the transmitter 430 and the receiver 440, or via the NFC transceiver 450, and/or to play games.

The apparatus 400 may comprise or be arranged to accept a user identity module 470. The user identity module 470 may comprise, for example, a Subscriber Identity Module, SIM, card installable in the apparatus 400. The user identity module 470 may comprise information identifying a subscription of a user of the apparatus 400. The user identity module 470 may comprise cryptographic information usable to verify the identity of a user of the apparatus 400 and/or to facilitate encryption of communicated information and billing of the user of the apparatus 400 for communication effected via the apparatus 400.

The processor 410 may be furnished with a transmitter arranged to output information from the processor 410, via electrical leads internal to the apparatus 400, to other devices comprised in the apparatus 400. Such a transmitter may comprise a serial bus transmitter arranged to, for example, output information via at least one electrical lead to the memory 420 for storage therein. Alternatively to a serial bus, the transmitter may comprise a parallel bus transmitter. Likewise, the processor 410 may comprise a receiver arranged to receive information in the processor 410, via electrical leads internal to the apparatus 400, from other devices comprised in the apparatus 400. Such a receiver may comprise a serial bus receiver arranged to, for example, receive information via at least one electrical lead from the receiver 440 for processing in the processor 410. Alternatively to a serial bus, the receiver 440 may comprise a parallel bus receiver.

The apparatus 400 may comprise further devices not illustrated in FIGURE 4. For example, where the apparatus 400 comprises a smartphone, it may comprise at least one digital camera. Some devices 400 may comprise a back-facing camera and a front-facing camera, wherein the back-facing camera may be intended for digital photography and the front-facing camera for video telephony. The apparatus 400 may comprise a fingerprint sensor arranged to authenticate, at least in part, a user of the apparatus 400. In some example embodiments, the apparatus 400 lacks at least one device described above. For example, some devices 400 may lack the NFC transceiver 450 and/or the user identity module 470.

The processor 410, the memory 420, the transmitter 430, the receiver 440, the NFC transceiver 450, the UI 460 and/or the user identity module 470 may be interconnected by electrical leads internal to the apparatus 400 in a multitude of different ways. For example, each of the aforementioned devices may be separately connected to a master bus internal to the apparatus 400, to allow for the devices to exchange information. However, as the skilled person will appreciate, this is only one example and depending on the example embodiment various ways of interconnecting at least two of the aforementioned devices may be selected without departing from the scope of the example embodiments.

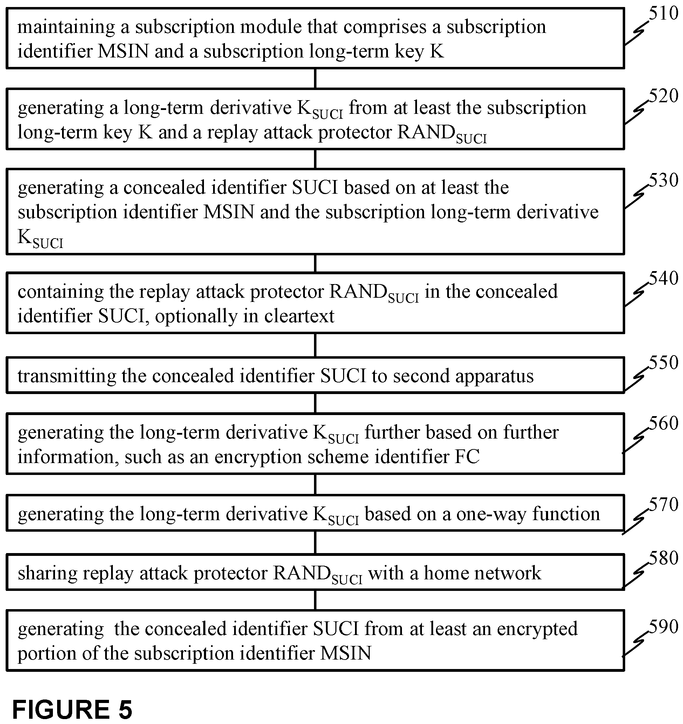

FIGURE 5 is a flow graph of a first method in accordance with at least some embodiments. The phases of the illustrated first method may be performed by a first apparatus, such as the first UE 110 or by a control device configured to control at least some functioning thereof, possibly when installed therein. The first method may be performed in the first UE or the control device. The first method may comprise, at step 510, maintaining a subscription module that comprises a subscription identifier (e.g., MSIN) and a subscription long-term key (e.g., K). The first method may also comprise, at step 520, generating a long-term derivative (e.g., K_{SUCI}) from at least the subscription long-term key (e.g., K) and a replay attack protector (e.g., RAND_{SUCI}). The first method may also comprise, at step 530, generating a concealed identifier (e.g., SUCI), using at least the subscription identifier (e.g., MSIN) and the subscription long-term derivative (e.g., K_{SUCI}). The first method may comprise, at step 540, containing the replay attack protector (e.g., RAND_{SUCI}) in the concealed identifier (e.g., SUCI), optionally in cleartext. The first method may comprise, at step 550, transmitting the concealed identifier (e.g., SUCI) to a second apparatus, such as a controller in the home network. The first method may comprise, at step 560, generating the long-term derivative (e.g., KSUCI) further using further information, such as an encryption scheme identifier (e.g., FC). The first method may comprise, at step 570, generating the long-term derivative (e.g., K_{SUCI}) using a one-way function. The first method may comprise, at step 580, sharing the replay attack protector (e.g., RAND_{SUCI}) with a home network. The first method may comprise, at step 590, generating the concealed identifier (e.g., SUCI) from at least an encrypted portion of the subscription identifier (e.g., MSIN).

FIGURE 6 is a flow graph of a second method in accordance with at least some embodiments. The phases of the illustrated second method may be performed by the deconcealing part of the authentication/subscriber management/deconcealing function 134 or by a control device configured to control at least some functioning thereof, possibly when installed therein.

The second method may comprise, at step 610, receiving, by a second apparatus, a concealed identifier (e.g., SUCI) from a first apparatus (e.g., first UE). The second method may also comprise, at step 620, deconcealing a subscription identifier (e.g., MSIN) from the concealed identifier (e.g., SUCI). The second method may also comprise, at step 630 obtaining a replay attack protector (e.g., RAND_{SUCI}) from the concealed identifier (e.g., SUCI). The second method may comprise, at step 640, obtaining a subscription long-term key (e.g., K) corresponding to the subscription identifier (e.g., MSIN). The second method may comprise, at step 650, generating, using at least the subscription long-term key (e.g., MSIN) and the replay attack protector (e.g., RAND_{SUCI}), a subscription long-term derivative (e.g., K_{SUCI}). The second method may comprise, at step 660, verifying whether the concealed identifier (e.g., SUCI) has been generated using the subscription long-term derivative (e.g., K_{SUCI}).

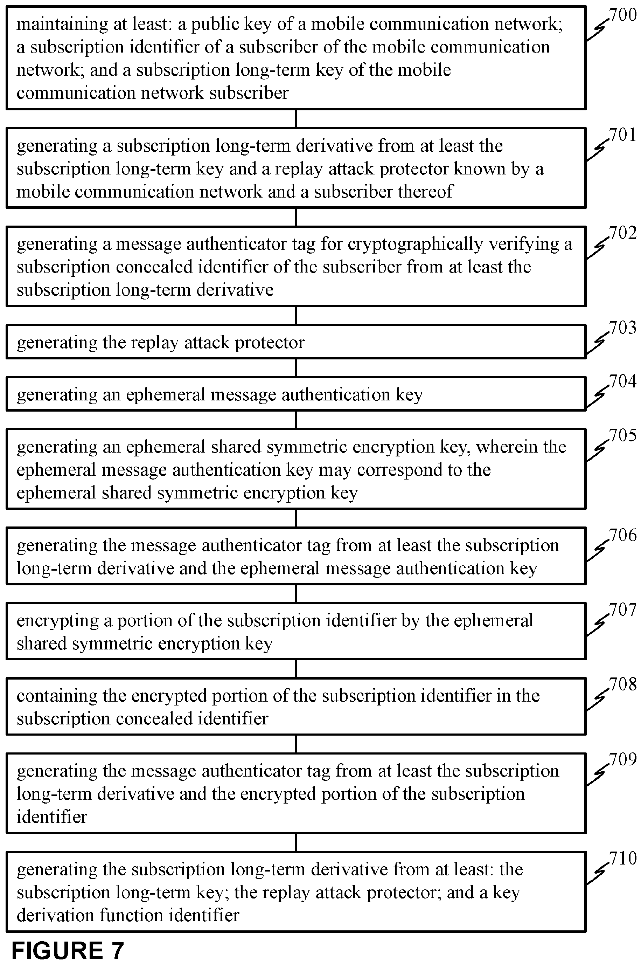

FIGURE 7 is a flow graph of a third method in accordance with at least some embodiments. The phases of the illustrated third method may be performed by the first UE 110, by a control device configured to control at least some functioning thereof, possibly when installed therein, or by the network, e.g., by the deconcealing part of the authentication/subscriber management/deconcealing function 134, or by a control device configured to control the functioning of any network function. The third method comprises any one or more of:
700. maintaining at least: a public key of a mobile communication network; a subscription identifier of a subscriber of the mobile communication network; and a subscription long-term key of the mobile communication network subscriber;
701. generating a subscription long-term derivative from at least the subscription long-term key and a replay attack protector shared by a mobile communication network and a subscriber thereof;
702. generating a message authenticator tag for cryptographically verifying a subscription concealed identifier of the subscriber from at least the subscription long-term derivative;
703. generating the replay attack protector;
704. generating an ephemeral message authentication key;
705. generating an ephemeral shared symmetric encryption key, wherein the ephemeral message authentication key may correspond to the ephemeral shared symmetric encryption key;
706. generating the message authenticator tag from at least the subscription long-term derivative and the ephemeral message authentication key;
707. encrypting a portion of the subscription identifier by the ephemeral shared symmetric encryption key;
708. containing the encrypted portion of the subscription identifier in the subscription concealed identifier;
709. generating the message authenticator tag from at least the subscription long-term derivative and the encrypted portion of the subscription identifier; and / or
710. generating the subscription long-term derivative from at least: the subscription long-term key; the replay attack protector; and a key derivation function identifier.

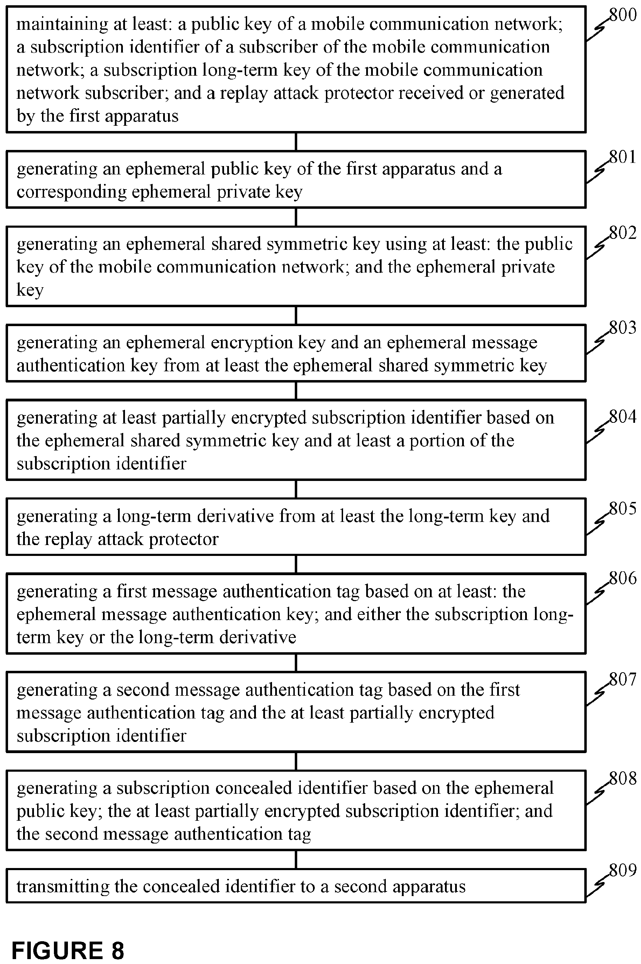

FIGURE 8 is a flow graph of a fourth method in accordance with at least some embodiments. The phases of the illustrated fourth method may be performed by the first UE 110. The phases of the illustrated fourth method may be performed by a first apparatus, such as a control device configured to control at least some functioning of the first UE, possibly when installed therein. The fourth method comprises any one or more of:
800. maintaining at least: a public key of a mobile communication network; a subscription identifier of a subscriber of the mobile communication network; a subscription long-term key of the mobile communication network subscriber; and a replay attack protector received or generated by the first apparatus;
801. generating an ephemeral public key of the first apparatus and a corresponding ephemeral private key;
802. generating an ephemeral shared symmetric key using at least: the public key of the mobile communication network; and the ephemeral private key;
803. generating an ephemeral encryption key and an ephemeral message authentication key from at least the ephemeral shared symmetric key;
804. generating at least partially encrypted subscription identifier based on the ephemeral shared symmetric key and at least a portion of the subscription identifier;
805. generating a long-term derivative from at least the long-term key and the replay attack protector;
806. generating a first message authentication tag based on at least: the ephemeral message authentication key; and either the subscription long-term key or the long-term derivative;
807. generating a second message authentication tag based on the first message authentication tag and the at least partially encrypted subscription identifier;
808. generating a subscription concealed identifier based on the ephemeral public key; the at least partially encrypted subscription identifier; and the second message authentication tag; and / or
809. transmitting the concealed identifier to a second apparatus.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an example embodiment, an apparatus, such as, for example, the first UE 110 or the deconcealing part of the authentication/subscriber management/deconcealing function 134, or a control device configured to control the functioning thereof, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, the first UE 110 or the deconcealing part of the authentication/subscriber management/deconcealing function 134, or a control device configured to control the functioning thereof, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality. The expression "at least one of A or B" in this document means A, or B, or both A and B.

### INDUSTRIAL APPLICABILITY

At least some embodiments find industrial application in cellular communication systems, for example in 3GPP systems.

### ACRONYMS LIST

- 3GPP: 3rd Generation Partnership Project
- 5GC: 5G Core network
- AMF: Access and Mobility management Function
- AUSF: Authentication Server Function
- BS: Base Station
- EPC: Evolved Packet Core
- EPS: Evolved Packet System
- eUICC: embedded Universal Integrated Circuit Card
- GSM: Global System for Mobile communication
- IMSI: International Mobile Subscriber Identity
- IoT: Internet of Things
- K: subscription long-term key
- K_{SUCI}: subscription long-term derivative
- LTE: Long-Term Evolution
- M2M: Machine-to-Machine
- MAC: Message Authentication Code
- MCC: Mobile Country Code
- MNC: Mobile Network Code
- MSIN: Mobile Subscriber Identification Number
- MTC: Machine-Type Communications
- NFC: Near-Field Communication
- NR: New Radio
- PLMN: Public Land Mobile Network
- RAN: Radio Access Network
- RAT: Radio Access Technology
- RRC: Radio Resource Control
- SEAF: Security Anchor Function
- SIDF: Subscription Identifier Deconcealing Function
- SIM: Subscriber Identity Module
- SUCI: Subscription Concealed Identifier
- SUPI: Subscription Permanent Identifier
- UDM: Unified Data Management
- UE: User Equipment
- UI: User Interface
- UICC: Universal Integrated Circuit Card
- USIM: Universal Subscriber Identity Module
- WCDMA: Wideband Code Division Multiple Access

### REFERENCE SIGNS LIST

- 110: User Equipment
- 115: Air interface
- 120: Base Station
- 125, 135: Wired interfaces
- 130: Core Network
- 132: Intermediary NF
- 134: Deconcealing function
- 210: First ephemeral MAC key
- 220: Long-term key
- 230: Second ephemeral MAC key and Function
- 240: Cipher-text value
- 250: MAC function
- 260: MAC tag
- 310 - 360: Steps in the signalling graph of FIGURE 3
- 400 - 470: Structure of the apparatus of FIGURE 4
- 510 - 590: Phases of the first method in FIGURE 5
- 610 - 670: Phases of the second method in FIGURE 6
- 700 - 710: Phases of the third method in FIGURE 7
- 800 - 809: Phases of the fourth method in FIGURE 8

## Claims

1. A first apparatus, comprising means for performing:
maintaining a subscription module, wherein the subscription module comprises a subscription identifier and a subscription long-term key;
generating a long-term derivative from at least the subscription long-term key and a replay attack protector; and
generating a concealed identifier based on at least the subscription identifier and the subscription long-term derivative, **characterized by**
the generating the concealed identifier further comprising generating an integrity Message Authentication Code, MAC, tag using the subscription long-term derivative as an input; wherein
the means are further configured to perform including the integrity MAC tag into the concealed identifier; and wherein
the generating the concealed identifier further comprises
generating an intermediate key;
generating a MAC key based on the intermediate key and the subscription long-term derivative; and
generating the integrity MAC tag based on the MAC key.

2. The first apparatus according to claim 1, wherein the means are further configured to perform generating the intermediate key based on a public key associated with the subscription module.

3. The first apparatus according to claim 1 or 2, wherein the means are further configured to perform transmitting the concealed identifier to a second apparatus.

4. The first apparatus according to any one of preceding claims, wherein the generating the long-term derivative further comprises generating the long-term derivative from at least: the subscription long-term key, the replay attack protector, and an encryption scheme identifier.

5. The first apparatus according to any one of preceding claims, wherein the generating the concealed identifier further comprises
obtaining from the first apparatus an ephemeral public key of the first apparatus;
generating an ephemeral shared symmetric key using at least: the private key of the mobile communication network, and the ephemeral public key of the first apparatus; and
verifying whether the concealed identifier has been generated using ephemeral shared symmetric key.

6. The first apparatus according to any one of preceding claims, wherein the generating the concealed identifier further comprises generating the concealed identifier from at least an encrypted portion of the subscription identifier.

7. The first apparatus according to any one of preceding claims, wherein the means comprises at least one processor; and at least one memory including computer program code, the at least one memory and computer program code configured to, with the at least one processor, cause the performance of the apparatus.

8. A second apparatus, comprising means for performing:
receiving a concealed identifier from a first apparatus;
deconcealing a subscription identifier from the concealed identifier;
obtaining a replay attack protector from the concealed identifier;
obtaining a subscription long-term key corresponding to the subscription identifier;
generating, using at least the subscription long-term key and the replay attack protector, a subscription long-term derivative; and
verifying whether the concealed identifier has been generated using the subscription long-term derivative, **characterized by**
the verifying further comprising
generating an integrity Message Authentication Code, MAC, tag using the subscription long-term key as an input;
comparing the generated integrity MAC tag with an integrity MAC tag which is a part of the concealed identifier;
generating an intermediate key;
generating a MAC key using the intermediate key and the subscription long-term key; and
generating the integrity MAC tag using the MAC key; wherein
the deconcealing further comprises
generating an intermediate key using a private key belonging to a public key associated with the subscription module;
generating a first MAC key using the intermediate key;
generating a second MAC key using the first MAC key and the subscription long-term key; and
generating an integrity MAC tag using the second MAC key.

9. The second apparatus according to claim 8, wherein the second apparatus is a controller in the home network.

10. The second apparatus according to claim 8 or 9, wherein the verifying the concealed identifier further comprises:
obtaining from the first apparatus an ephemeral public key of the first apparatus;
generating an ephemeral shared symmetric key using at least: the private key of the mobile communication network, and the ephemeral public key of the first apparatus; and
verifying whether the concealed identifier has been generated using ephemeral shared symmetric key.

11. The second apparatus according to any one of claims 8 to 10, wherein the means comprises at least one processor; and at least one memory including computer program code, the at least one memory and computer program code configured to, with the at least one processor, cause the performance of the apparatus.

12. A method in a first or second apparatus, comprising:
maintaining a subscription module, wherein the subscription module comprises a subscription identifier and a subscription long-term key;
generating a long-term derivative from at least the subscription long-term key and a replay attack protector; and
generating a concealed identifier based on at least the subscription identifier and the subscription long-term derivative, **characterized by**
the generating of the concealed identifier further comprising generating an integrity Message Authentication Code, MAC, tag using the subscription long-term derivative as an input;
including the integrity MAC tag into the concealed identifier;
the generating of the concealed identifier further comprising generating an intermediate key;
the generating of the concealed identifier further comprising generating a MAC key based on the intermediate key and the subscription long-term derivative; and
the generating of the concealed identifier further comprising generating the integrity MAC tag based on the MAC key.

13. A method in a second apparatus, comprising:
receiving a concealed identifier from a first apparatus;
deconcealing a subscription identifier from the concealed identifier;
obtaining a replay attack protector from the concealed identifier;
obtaining a subscription long-term key corresponding to the subscription identifier;
generating, using at least the subscription long-term key and the replay attack protector, a subscription long-term derivative; and
verifying whether the concealed identifier has been generated using the subscription long-term derivative, **characterized by**
the verifying further comprising generating an integrity Message Authentication Code, MAC, tag using the subscription long-term key as an input, and comparing the generated integrity MAC tag with an integrity MAC tag which is a part of the concealed identifier;
the verifying further comprising generating an intermediate key, generating a MAC key using the intermediate key and the subscription long-term key and generating the integrity MAC tag using the MAC key; and
the deconcealing of the concealed identifier further comprising generating an intermediate key using a private key belonging to a public key associated with the subscription module, generating a first MAC key using the intermediate key, generating a second MAC key using the first MAC key and the subscription long-term key, and generating an integrity MAC tag using the second MAC key.

14. A computer program comprising instructions for causing an apparatus to perform at least the following:
maintaining a subscription module, wherein the subscription module comprises a subscription identifier and a subscription long-term key;
generating a long-term derivative from at least the subscription long-term key and a replay attack protector; and
generating a concealed identifier based on at least the subscription identifier and the subscription long-term derivative, **characterized by**
the generating of the concealed identifier further comprising generating an integrity Message Authentication Code, MAC, tag using the subscription long-term derivative as an input;
including the integrity MAC tag into the concealed identifier;
the generating of the concealed identifier further comprising generating an intermediate key;
the generating of the concealed identifier further comprising generating a MAC key based on the intermediate key and the subscription long-term derivative; and
the generating of the concealed identifier further comprising generating the integrity MAC tag based on the MAC key.

15. A computer program comprising instructions for causing an apparatus to perform at least the following:
receiving a concealed identifier from a first apparatus;
deconcealing a subscription identifier from the concealed identifier;
obtaining a replay attack protector from the concealed identifier;
obtaining a subscription long-term key corresponding to the subscription identifier;
generating, using at least the subscription long-term key and the replay attack protector, a subscription long-term derivative; and
verifying whether the concealed identifier has been generated using the subscription long-term derivative, **characterized by**
the verifying further comprising generating an integrity Message Authentication Code, MAC, tag using the subscription long-term key as an input, and comparing the generated integrity MAC tag with an integrity MAC tag which is a part of the concealed identifier;
the verifying further comprising generating an intermediate key, generating a MAC key using the intermediate key and the subscription long-term key and generating the integrity MAC tag using the MAC key; and
the deconcealing of the concealed identifier further comprising generating an intermediate key using a private key belonging to a public key associated with the subscription module, generating a first MAC key using the intermediate key, generating a second MAC key using the first MAC key and the subscription long-term key, and generating an integrity MAC tag using the second MAC key.
